Europäisches Patentamt

European Patent Office

Office européen des brevets

(19)

(11) Numéro de publication: **0 210 128 B1**

(12) **FASCICULE DE BREVET EUROPEEN**

(45) Date de publication du fascicule du brevet:
**31.01.90**

(21) Numéro de dépôt: **86810267.4**

(22) Date de dépôt: **13.06.86**

(51) Int. Cl.⁴: **F 16 D 1/02, B 23 B 31/02**

(54) **Dispositif de liaison entre une broche d'une machine d'usinage et un porte-outil.**

(30) Priorité: **25.06.85 CH 2702/85**

(43) Date de publication de la demande:
**28.01.87 Bulletin 87/5**

(45) Mention de la délivrance du brevet:
**31.01.90 Bulletin 90/5**

(84) Etats contractants désignés:
**DE FR GB IT**

(56) Documents cités:
**DE-A- 2 545 928**
**DE-B- 2 146 876**
**FR-A- 1 180 254**
**FR-A- 1 492 649**
**US-A- 3 115 348**

(73) Titulaire: **Schäublin SA Succursale de Delémont, Chemin du Ticle 6, CH-2800 Delémont (CH)**

(72) Inventeur: **Menozzi, Romain, rue des Romains 400 B, CH-2822 Courroux (CH)**

(74) Mandataire: **Rochat, Daniel Jean et al, Bovard SA Ingénieurs-conseils ACP Optingenstrasse 16, CH-3000 Bern 25 (CH)**

ACTORUM AG

## Description

La présente invention a pour objet un dispositif de liaison entre une broche d'une machine d'usinage, et un porte-outil échangeable fixé à cette broche, dans lequel les deux organes, la broche et le porte-outil présentent des surfaces de centrage de révolution capables de coopérer l'une avec l'autre, et des moyens d'accouplement qui consistent, pour un premier des dits organes, en une succession de gorges et de nervures longitudinales et pour le second organe en un ensemble de clavelettes solidaires en rotation par rapport à ce second organe et mobiles radialement par rapport à lui contre l'action de moyens élastiques agissant sur elles.

On sait qu'à l'heure actuelle de nombreuses machines d'usinage sont équipées de dispositifs de commande numérique et comportent en regard de la ou des broches porte-outil des dispositifs automatiques de changement d'outils, de sorte que les programmes d'usinage peuvent comprendre plusieurs opérations d'usinage successives effectuées avec des outils différents au moyen d'une même broche entraînée en rotation sans qu'il soit nécessaire de modifier la position de la pièce ou de la barre sur laquelle les opérations sont effectuées.

En général, les dispositifs de changement d'outil automatiques comportent un bras transporteur pourvu d'une pince et pouvant être manoeuvré de façon à saisir le porte-outil monté sur la broche, à le dégager de la broche pour l'amener dans un magasin, à introduire ensuite un nouveau porte-outil dans la broche et l'accoupler à cette dernière dans une position assurant son entraînement et la transmission du couple nécessaire.

Toutefois, la présentation du nouveau porte-outil dans une orientation telle que l'accouplement à la broche s'effectue correctement pose un problème. En général le porte-outil est fixé dans la broche au moyen d'un tirant qui agit axialement et comporte à son extrémité soit un filetage s'engageant dans un taraudage correspondant du porte-outil, soit un système de prise automatique s'accrochant sur un prolongement arrière du porte-outil. Pour établir une liaison capable de transmettre un couple entre la broche et le porte-outil on prévoit souvent sur l'un des organes des clavettes d'entraînement et sur l'autre des ouvertures ou encoches correspondantes, ou un profil mâle s'engageant dans un profil femelle correspondant. Pour assurer l'engagement de ces éléments les uns dans les autres il faut, dans les dispositifs connus, d'une part que la broche soit arrêtée dans une orientation fixe et d'autre part que le bras transporteur présente le porte-outil dans une orientation telle que l'engagement des éléments d'accouplement s'effectue sans heurt et sans coincement par un simple déplacement axial. Il faut donc équiper la broche d'un dispositif d'arrêt de broche avec positionnement et les opérations d'arrêt de broche sont prolongées de sorte que la machine n'est pas utilisée dans des conditions optimales. De plus, son coût est augmenté des frais nécessaires pour le dispositif d'arrêt de broche positionné.

La publication no. DE 2 545 928 décrit un dispositif dans lequel les deux organes, la broche et le porte-outil, comportent chacun une couronne dentée, les profils des deux couronnes étant complémentaires. Il en est de même de la publication FR 1 492 649. Dans le dispositif décrit par cette dernière publication, il est prévu un organe en forme de clavette mobile radialement contre l'action d'un ressort et capable de corriger l'orientation relative des deux organes l'un par rapport à l'autre au moment de leur engagement mutuel. Cependant, la présence de cet organe auxiliaire crée une dissymétrie dans l'agencement du dispositif de liaison, dissymétrie qui est la source de déséquilibres par suite de la force centrifuge lors d'un rotation à grande vitesse.

Un dispositif du même genre est également décrit dans le fascicule de brevet français FR-1 180 254. Toutefois, ce dispositif n'est pas prévu pour l'accouplement d'un porte-outil à une broche d'entraînement dans une machine d'usinage tournant à grande vitesse et la disposition des moyens d'accouplement n'est pas symétrique par rapport à l'axe commun des deux organes, de sorte que les effets de la force centrifuge non équilibrée peuvent se faire sentir.

Un autre dispositif de liaison entre une broche d'une machine d'usinage et un porte-outil échangeable fixé à cette broche, qui présente les caractéristiques énoncées au début, est décrit dans la publication US-3 115 348. Ici également le porte-outil est rendu solidaire de la broche en rotation par un ensemble de clavettes mobiles radialement contre l'action de moyen élastiques, et dont une partie s'engagent dans des gorges longitudinales du porte-outil.

Ce dispositif connu ne répond pas de manière satisfaisante aux exigences de la technique dans le cas où la vitesse de rotation de la broche est, en travail, très élevée, et où une grande précision d'usinage est requise. En effet, comme seule une partie des clavettes sont en position d'engagement, la disposition de l'ensemble n'est pas symétrique par rapport à l'axe et il est dès lors difficile d'éviter les vibrations de la broche.

Il a été reconnu que cet inconvénient est nécessairement lié à l'exigence selon laquelle le porte-outil doit pouvoir être engagé dans la broche dans une orientation quelconque et s'accoupler à la broche dans cette orientation sans aucune dérive angulaire.

Le but de la présente invention est de créer un dispositif de liaison du genre mentionné au début, qui permet la mise en place d'un porte-outil sans nécessiter un positionnement prédéterminé de la broche, et qui s'adapte facilement aux moyens de liaison usuels entre les broches et les porte-outils, par exemple aux cônes d'outillage normalisés tels que les cônes d'outillage selon la norme VSM 33930 ou d'autres normes et exécutions spéciales du même genre. En outre, l'invention vise à réaliser un dispositif de liaison simple fonctionnant de façon fiable même à des vitesses maximales.

Elle découle de l'idée de prévoir que les clavettes puissent le cas échéant parvenir dans leur position d'accouplement après une certaine dérive angulaire du porte-outil par rapport à la broche.

Dans ce but, le dispositif selon l'invention est caractérisé en ce que lesdites clavettes présentant une largeur adaptée au profil des gorges, sont réparties symétriquement autour de l'axe du second organe et sont conformées de manière à s'engager simultanément sous l'action des moyens élastiques, en position d'accouplement, chacune dans une gorge du premier organe.

Par porte-outil on entend ici un organe capable de recevoir un outil tel qu'une fraise ou un foret avec queue cylindrique, de même qu'une pince destinée elle-même à recevoir l'outil proprement dit.

Comme on le verra plus loin, une forme d'exécution avantageuse du dispositif selon l'invention consiste en ce que le porte-outil présente à l'arrière de sa surface de centrage qui peut elle-même être cylindrique ou conique, des éléments d'accouplement constitués de deux clavettes supportées par deux bagues fendues, chaque clavette étant soudée sur une des bagues et présentant en outre une fente qui guide l'autre bague.

Cette forme d'exécution avantageuse de l'objet de l'invention va être décrite ci-après plus en détail en se référant au dessin annexé, dont:

la fig. 1 est une vue en coupe axiale de l'extrémité d'une broche de machine-outil,

la fig. 2 est une vue en élévation de l'extrémité de la broche représentée à la fig. 1,

la fig. 3 est une vue partiellement coupée et partiellement en élévation de l'organe porte-outil à une échelle légèrement agrandie,

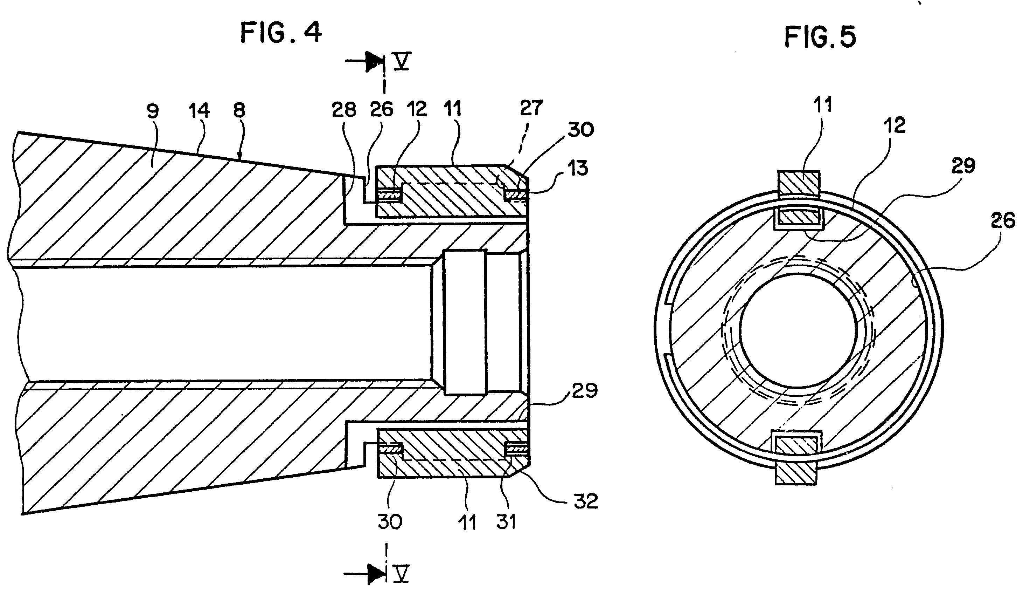

la fig. 4 est une vue en coupe partielle de l'organe de la fig. 3 à plus grande échelle, le tasseau d'accrochage étant enlevé,

la fig. 5 est une vue en coupe selon la ligne V-V de la fig. 4,

les fig. 6 et 7 sont des vues respectivement en coupe axiale et en élévation frontale à la même échelle que la fig. 4 d'une clavette et de la bague correspondante.

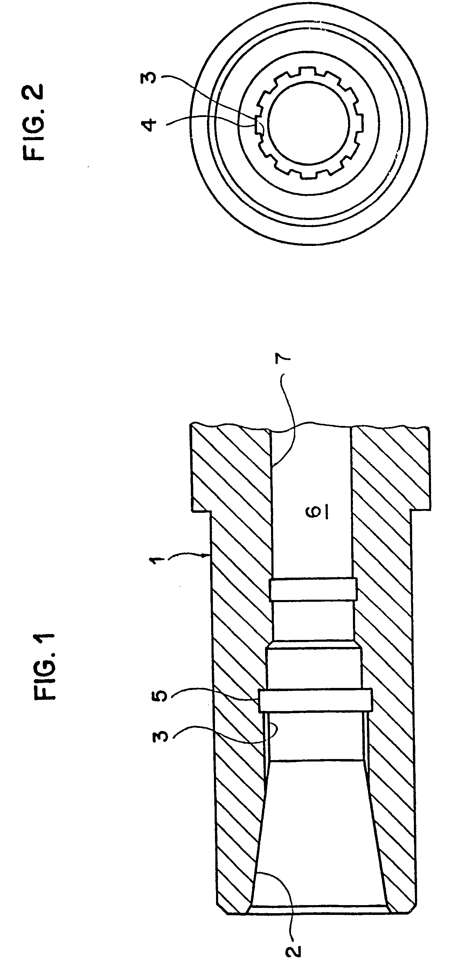

La broche 1 représentée à la fig. 1 fait partie d'un centre d'usinage à commande numérique et à dispositif de changement d'outil automatique. Elle pourrait toutefois faire partie d'une machine-outils à changement d'outils manuel. Il n'est pas nécessaire de montrer ici comment cette broche est supportée sur un bâti susceptible d'être déplacé en translation en réponse à la commande numérique de la machine, ni comment elle est entraînée en rotation autour de son axe dans des paliers la reliant au bâti. Cette broche présente un logement axial 6 qui se termine à son extrémité antérieure par une surface de centrage conique 2. Elle comporte, à l'extrémité interne de la surface 2 des éléments d'accouplement constitués par des nervures 3 de profil rectangulaire séparées les unes des autres par des gorges correspondantes 4. Le diamètre intérieur des nervures 3 correspond au diamètre final de la surface de centrage 2. Dans le sens axial, les nervures 3 s'étendent jusqu'à une partie profilée 5 du passage axial. Ce passage axial comporte sur sa plus grande longueur un alésage 7. Il est destiné à guider un organe de traction (non représenté) susceptible de venir accrocher un porte-outil 8 comme on le verra plus loin.

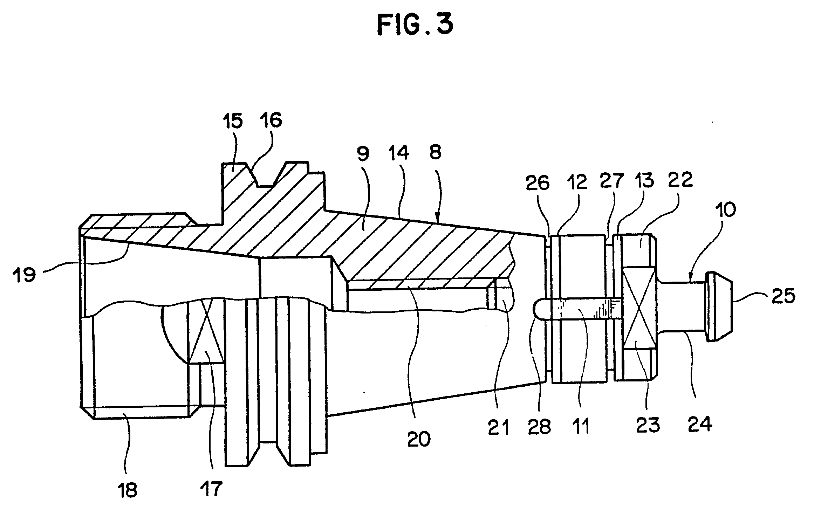

L'organe porte-outil 8 est représenté dans son ensemble à la fig. 3. Il est constitué d'un manchon 9, d'un tasseau d'accrochage 10, de deux clavettes 11 et de deux bagues élastiques 12 et 13. Le manchon 9 est une pièce dont la plupart des éléments fonctionnels présentent un profil qui sera souvent un profil normalisé, mais peut aussi être de construction spéciale. La surface de centrage extérieure 14 de forme conique correspond à la surface de centrage 2 de la broche 1. En avant de cette surface 14 s'étend une collerette 15 avec une gorge circulaire 16 de profil trapézoïdal. L'organe porte-outil de la fig. 3 présente en avant de la collerette 15 une portée dans laquelle sont ménagés deux méplats 17 et en avant de cette portée une partie filetée 18 destinée à recevoir un écrou de serrage de pince. Le profil intérieur de l'organe porte-outil 8 comporte un cône de centrage 19 auquel fait suite un passage axial taraudé 20. Toutefois, tout autre élément d'accouplement et de liaison entre le porte-outil et l'outil ou la pince pourrait également être prévu en lieu et place des éléments 19 et 18. Dans la forme d'exécution décrite, le taraudage 20 est destiné à recevoir la partie avant filetée 21 du tasseau 10. Comme on le voit à la fig. 3, l'organe d'accrochage 10 présente à peu près au milieu de sa longueur une collerette 22 munie de deux méplats 23 permettant son vissage dans le taraudage 20. Vers l'arrière, l'organe d'accrochage se prolonge par un élément d'arbre 24 et par une noix 25 à laquelle peut s'accrocher une pince ou autre moyen de traction (non représenté), ce moyen étant lié au tirant prévu à l'intérieur du passage axial 6 de la broche 1. Ainsi, l'organe 8 peut être tenu en place axialement à l'intérieur de la broche 1, sa surface de centrage 14 étant appliquée contre la surface 2 de la broche.

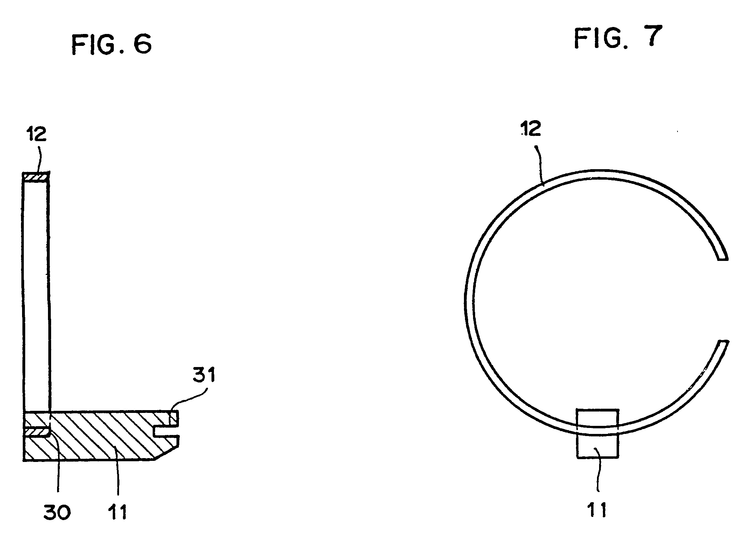

Pour réaliser l'accouplement entre la broche 1 et le porte-outil 8, sans qu'il soit nécessaire d'orienter au préalable les deux organes l'un par rapport à l'autre, le porte-outil 8 est équipé à la partie arrière du manchon 9 d'un système de deux clavettes 11 tenues en place par des bagues élastiques 12 et 13. Le manchon 9 est usiné avec une gorge circonférentielle 26 et une saignée 27, toutes deux de profil rectangulaire et avec deux rainures 28 et 29 rectilignes fraisées dans le sens axial et diamétralement opposées. Une des deux clavettes 11 est représentée en détail aux fig. 6 et 7. Il s'agit d'un bloc en forme de parallélépipède muni à chacune de ses extrémités d'une fente 30 et 31 de profil rectangulaire, ce profil correspondant à celui des deux bagues 12 et 13. La bague 12 est soudée par exemple par une soudure à l'étain dans la fente 30 d'une des clavettes 11, tandis que la bague 13 est soudée de même dans la fente 31 de l'autre clavette 11. De la sorte, chaque clavette 11 est portée par une des deux bagues fendues et guide l'autre en un emplacement diamétralement opposé à celui auquel elle est fixée à la clavette. Les clavettes sont ainsi tenues en place dans les rainures longitudinales 28 et 29, de sorte qu'elles sont solidaires du manchon 9 en rotation. Cependant, du fait qu'elles sont supportées par les bagues 12 et 13, elles sont mobiles radialement dans les rainures 28 et 29. Chaque clavette 11 présente à son extrémité arrière un biseau 32 qui assure la compression des bagues-ressort 12 et 13 au moment de l'engagement du porte-outil si les clavettes 11 viennent buter contre des nervures 3 de la broche. Ainsi est obtenue la possibilité d'engager le porte-outil sans tenir compte de l'orientation de la broche. Si les clavettes 11 se trouvent exactement en regard de deux gorges 4, diamétralement opposées, elles s'engagent à l'intérieur de ces gorges et le porte-outil est directement accouplé à la broche. Si en revanche les clavettes 11 viennent buter sur des nervures 3, les bagues 12 et 13 sont comprimées et les clavettes 11 se déplacent radialement vers l'axe du porte-outil, la profondeur des rainures 28 et 29 étant prévue en conséquence. Toutefois, au moment où l'outil entre en contact avec la pièce à usiner, le couple de résistance provoque une rotation du porte-outil par rapport à la broche et les clavettes 11 s'engagent dans deux rainures 4 diamétralement opposées ce qui assure l'accouplement automatique.

On réalise ainsi un dispositif très simple et peu encombrant qui, comme on l'a dit précédemment, présente l'avantage qu'il n'est plus nécessaire d'équiper le centre d'usinage de dispositif d'arrêt de broche à positionnement. Il en résulte un gain de temps lors de chaque changement d'outil. De plus, la mise en place d'un outil est facilitée même dans le cas où le changement se fait manuellement, puisqu'il n'est plus nécessaire de chercher l'entrée des gorges d'accouplement lors de la mise en place.

On notera encore que la disposition décrite pourrait aussi être réalisée de façon inversée en ce sens que le porte-outil présenterait une série de nervures et de gorges, tandis que le logement interne de la broche serait équipé de clavettes montées sur ressorts. Quelle que soit la disposition choisie, on peut également concevoir des réalisations différentes de celles qui ont été décrites pour le montage des clavettes. Ainsi par exemple chaque clavette pourrait être supportée par une lame-ressort disposée axialement ou, le cas échéant, sollicitée par des éléments élastiques, d'une autre forme que des lames arquées ou cintrées. Finalement le dispositif décrit s'appliquerait également dans le cas où la broche serait en fait un arbre présentant des moyens d'accouplement à sa périphérie et non pas dans un logement interne, le porte-outil étant lui réalisé sous forme d'un manchon externe venant s'engager sur l'extrémité de l'arbre.

**Revendications**

1. Dispositif de liaison entre une broche (1) d'une machine d'usinage et un porte-outil échangeable (8) fixé à cette broche, dans lequel les deux organes, la broche et le porte-outil, présentent des surfaces de centrage de révolution (14, 2) capables de coopérer l'une avec l'autre, et des moyens d'accouplement (3, 4, 11) qui consistent, pour un premier desdits organes (1), en une succession de gorges (4) et des nervures longitudinales (3) et pour le second organe (8) en un ensemble de clavettes (11) solidaires en rotation par rapport à ce second organe et mobiles radialement par rapport à lui contre l'action de moyens élastiques (12) agissant sur elles, caractérisé en ce que lesdites clavettes présentant une largeur adaptée au profil des gorges, sont réparties symétriquement autour de l'axe du second organe et sont conformées de manière à s'engager simultanément sous l'action des moyens élastiques, en position d'accouplement, chacune dans une gorge (4) du premier organe (1).

2. Dispositif selon la revendication 1, caractérisé en ce que chaque clavette (11) est supportée par au moins un organe élastique (12) et est engagée dans une rainure longitudinale (28, 29) du second organe (8).

3. Dispositif selon la revendication 1, caractérisé en ce que le nombre des gorges longitudinales (4) du premier organe (1) est supérieur à celui des clavettes (11) du second organe (8).

4. Dispositif selon les revendications 2 et 3, caractérisé en ce que le ou lesdits organes élastiques (12) sont bagues fendues engagées avec jeu dans des gorges circulaires (26, 27) de l'organe (8) portant les clavettes.

5. Dispositif selon l'une quelconque des revendications 1 à 4, caractérisé en ce que l'organe (8) portant les clavettes comporte deux clavettes (11) diamétralement opposées et portées par deux bagues fendues (12), chaque clavette étant rigidement liée par une de ses extrémités à l'une des bagues et guidant avec jeu à son autre extrémité l'autre bague.

6. Dispositif selon la revendication 5, caractérisé en ce que chaque clavette (11) présente à ses deux extrémités des ouvertures (30, 31) ayant un profil correspondant à celui des bagues, et dans lesquelles ces dernières sont engagées.

7. Dispositif selon la revendication 6, caractérisé en ce que les bagues ont un profil rectangulaire et en ce que les dites ouvertures sont des fentes débouchant chacune dans une des extrémités des clavettes.

8. Dispositif selon la revendication 7, caractérisé en ce que chaque bague est soudée dans une fente d'une clavette et guidée avec jeu dans l'autre fente de l'autre clavette.

9. Dispositif selon la revendication 1, caractérisé en ce que l'organe (8) qui porte les clavettes est le porte-outil et présente une surface de centrage (14) qui est une surface extérieure tandis que l'autre organe (1) est la broche, sa surface de centrage (2) étant une surface intérieure.

10. Dispositif selon la revendication 9, caractérisé en ce que les dites surfaces de centrage sont adjacentes aux dites moyens d'accouplement.

**Patentansprüche**

1. Kupplungsvorrichtung zwischen einer Bearbeitungsmaschinenspindel (1) und einem an dieser Spindel befestigten auswechselbaren Werkzeughalter (8), in welcher die beiden Organe, die Spindel und der Werkzeughalter, um eine feste Achse umlaufende Zentrieroberflächen (14, 2), die miteinander kooperieren, aufweisen, und Kupplungsmittel (3, 4, 11), die für das erste der genannten Organe (1) aus einer Folge von längsverlaufenden Rillen (4) und Rippen (3) und für das zweite Organ (8) aus einem Paar Keilen (11) bestehen, welche letzteren mit dem zweiten Organ rotationsverbunden und gegen die Wirkung von elastischen Mitteln (12) zum zweiten Organ radial beweglich sind, dadurch gekennzeichnet, dass die genannten Keile, die eine dem Profil der Rillen angepasste Breite aufweisen, symmetrisch um die Achse des zweiten Organes verteilt sind und dass sie, durch die Wirkung der elastischen Mittel, zum simultanen Eingreifen eines jeden der Keile in eine der Rillen des ersten Organes, zum Erreichen einer eingekuppelten Stellung, ausgebildet sind.

2. Vorrichtung nach Anspruch 1, dadurch gekennzeichnet, dass jeder Keil (11) durch mindestens ein elastisches Organ (12) abgestützt und in einer Längsnut (28, 29) des zweiten Organes (8) angeordnet ist.

3. Vorrichtung nach Anspruch 1, dadurch gekennzeichnet, dass die Anzahl der längsverlaufenden Rillen (4) des ersten Organes (1) grösser ist als diejenige der Keile (11) des zweiten Organes (8).

4. Vorrichtung nach Anspruch 2 und 3, dadurch gekennzeichnet, dass das oder die elastischen Organe (12) aufgetrennte Ringe sind die mit Spiel in kreisförmigen Nuten (26, 27) des die Keile tragenden Organes (8) angeordnet sind.

5. Vorrichtung nach einem der Ansprüche 1 bis 4, dadurch gekennzeichnet, dass das die Keile tragende Organ (8) zwei diametral gegenüberliegende und durch zwei aufgetrennte Ringe (12) getragene Keile (11) aufweist, wobei jeder der Keile mit einem seiner Enden an einem der Ringe starr verbunden und mit seinem anderen Ende mit Spiel auf dem anderen Ring geführt ist.

6. Vorrichtung nach Anspruch 5, dadurch gekennzeichnet, dass jeder der Keile (11) an seinen zwei Enden Öffnungen (30, 31) aufweist deren Querschnitt demjenigen der Ringe, die in die Öffnungen eingreifen, entspricht.

7. Vorrichtung nach Anspruch 6, dadurch gekennzeichnet, dass die Ringe einen rechteckförmigen Querschnitt haben und dass die genannten Öffnungen Schlitze sind, wobei jeder der Schlitze in eines der Enden der Keile mündet.

8. Vorrichtung nach Anspruch 7, dadurch gekennzeichnet, dass jeder der Ringe im einen Schlitz des einen Keiles eingelötet und mit Spiel im anderen Schlitz des anderen Keiles geführt ist.

9. Vorrichtung nach Anspruch 1, dadurch gekennzeichnet, dass das die Keile tragende Organ (8) der, eine äussere Zentrieroberfläche (14) aufweisende Werkzeughalter ist, während das andere Organ (1) die Spindel, mit einer inneren Zentrieroberfläche (2), ist.

10. Vorrichtung nach Anspruch 9, dadurch gekennzeichnet, dass die genannten Zentrieroberflächen zu den genannten Kupplungsmitteln benachbart sind.

**Claims**

1. Device for connection between a spindle (1) of a processing machine and an interchangeable tool-holder (8) fixed to this spindle, in which the two parts, the spindle and the tool-holder, have centring surfaces of revolution (14, 2) capable of co-operating with one another, and coupling means (3, 4, 11) which consist, for a first one of said parts (1), of a succession of longitudinal grooves (4) and ribs (3) and for the second part (8) of a set of keys (11) integral in rotation relative to this second part and radially movable relative thereto against the action of elastic means (12) acting on them, characterized in that said keys have a width adapted to the section of the grooves, are distributed symmetrically about the axis of the second part, and are formed so as to fit simultaneously under the influence of the elastic means, in coupling position, each in a groove (4) of the first part (1).

2. Device according to claim 1, characterized in that each key (11) is supported by at least one elastic part (12) and is fitted in a longitudinal slot (28, 29) of the second part (8).

3. Device according to claim 1, characterized in that the number of longitudinal grooves (4) of the first part (1) is greater than that of the keys (11) of the second part (8).

4. Device according to claims 2 and 3, characterized in that the elastic part or parts (12) are split rings fitted with play in circular grooves (26, 27) of the part (8) bearing the keys.

5. Device according to any one of the claims 1 to 4, characterized in that the part (8) bearing the keys comprises two diametrically opposite keys (11) borne by two split rings (12), each key being rigidly joined by one of its ends to one of the rings and guiding the other ring with play at its other end.

6. Device according to claim 5, characterized in that each key (11) has at its two ends openings (30, 31) having a section matching that of the rings, and in which the latter are fitted.

7. Device according to claim 6, characterized in that the rings have a rectangular section, and in that the said openings are slits each opening out in one of the ends of the keys.

8. Device according to claim 7, characterized in that each ring is soldered in a slit of a key and guided with play in the other slit of the other key.

9. Device according to claim 1, characterized in that the part (8) which bears the keys is the tool-holder and has a centring surface (14) which is an outer surface, while the other part (1) is the spindle, its centring surface (2) being an inner surface.

10. Device according to claim 9, characterized in that the said centring surfaces are adjacent to the said coupling means.

# FIG. 1

# FIG. 2

EP 0 210 128 B1

# FIG.3

EP 0 210 128 B1

# FIG. 4

# FIG.5

EP 0 210 128 B1

# FIG. 6

# FIG. 7

EP 0 210 128 B1